# EUROPÄISCHE PATENTANMELDUNG

(11) **EP 1 440 739 A2**
(43) Veröffentlichungstag der Anmeldung: **28.07.2004**
(21) Anmeldenummer: 03104620.4
(22) Anmeldetag: 10.12.2003
(51) Int. Cl.: B06B 3/00, B23B 31/11

(54) **Ultraschall-Kupplung**

(30) Priorität: 13.12.2002 DE 10258297
(71) Anmelder: HILTI Aktiengesellschaft, 9494 Schaan (LI)
(72) Erfinder: Sander, Bernhard, 81379, München (DE); Mündle, Jürgen, 6822, Satteins (AT)
(74) Vertreter: Wildi, Roland

(57) **Zusammenfassung**

Eine Kupplung (1) zur Übertragung von Ultraschall längs einer Schwingachse (A) zwischen einer Werkzeugaufnahme (2) und einem Werkzeug (3) mit zwei gegeneinander orientierten Kontaktmitteln (4a, 4b), die über ein Vorspannmittel (5) axial vorspannbar sind, wobei zumindest ein Kontaktmittel (4a, 4b) zumindest eine axial orientierte, linienförmige oder punktförmige Kontaktspitze (6) aufweist.

## Beschreibung

Die Erfindung bezeichnet eine Kupplung zur Übertragung von Schwingungen zwischen zwei Bauteilen, insbesondere von Ultraschall zwischen einer Werkzeugaufnahme und einem Werkzeug zur Bearbeitung von Gestein, Beton, etc..

Üblicherweise werden zur Übertragung von Longitudinalkörperwellen in Form von Ultraschall-Schwingungen zwischen zwei Bauteilen grossflächig aufliegende, in Ausbreitungsrichtung zueinander druckvorgespannte, Kontaktflächen benutzt.

Nach der W09218861 sind zur messtechnischen Übertragung von Ultraschall auf einen Prüfkörper mehrere räumlich und richtungsmässig verteilte Kontaktflächen punktförmig ausgebildet. Zur Übertragung der Nutzleistung auf ein Werkzeug ist diese Lösung nicht geeignet.

Nach der FR2579123 sowie der W09222259 sind zwischen einer Werkzeugaufnahme und einem Werkzeug über ein Schraubgewinde axial vorgespannte Kontaktflächen bekannt, die axial grossflächig ausgebildet sind. Insbesondere bei der Bearbeitung von spröden Materialien treten an den Werkzeugen hohe Verschmutzungsgrade auf, welche vor jedem Kupplungsvorgang peinlich gesäubert werden müssten, was im rauhen Baugewerbe unüblich ist.

Die Aufgabe der Erfindung besteht in der Realisierung einer Kupplung zur Übertragungen von Ultraschall zwischen einer Werkzeugaufnahme und einem Werkzeug, welche auch bei hohen Verschmutzungsgraden einsetzbar ist.

Die Aufgabe wird im Wesentlichen durch die Merkmale der unabhängigen Ansprüche gelöst. Vorteilhafte Weiterbildungen ergeben sich aus den Unteransprüchen.

Im Wesentlichen sind bei einer Kupplung zur Übertragung von Ultraschall längs einer Schwingachse zwischen einer Werkzeugaufnahme und einem Werkzeug zwei gegeneinander orientierte Kontaktmittel vorhanden, die über ein Vorspannmittel axial vorspannbar sind, wobei zumindest ein Kontaktmittel zumindest eine axial orientierte, linienförmige oder punktförmige Kontaktspitze aufweist.

Durch die axial orientierte Kontaktspitze wird eine bei hohen Verschmutzungsgraden zwischen den Kontaktmitteln vorhandene Verschmutzung von der Kontaktspitze seitlich verdrängt, und über die in das gegenüberliegende Kontaktmittel eingebettete Kontaktspitze der Ultraschall übertragen.

Vorteilhaft sind mehrere Kontaktspitzen über das Kontaktmittel versetzt beabstandet, wodurch der zur Übertragung nutzbare Bettungsbereich vergrössert wird.

Vorteilhaft ist die Kontaktspitze linienförmig ausgebildet, wodurch punktförmige Bettungen vermieden werden, welche zu plastischen Deformationen führen können.

Vorteilhaft weisen beide Kontaktmittel einander zugeordnete Kontaktspitzen auf, wodurch die Zwischenräume für die Verschmutzung vergrössert sind.

Vorteilhaft ist die linienförmig ausgebildete Kontaktspitze ringförmig ausgebildet, wodurch diese der Symmetrie einer rotationssymmetrischen Kupplung entspricht.

Vorteilhaft ist das Vorspannmittel als eine axial orientierte Schraubgewindeverspannung ausgebildet, wodurch die Kupplung durch übliches Verschrauben erfolgt.

Die Erfindung wird bezüglich eines vorteilhaften Ausführungsbeispiels näher erläutert mit:
Fig. 1 als Kupplung, in Seitenansicht partiell geschnitten;
Fig. 2 als Variante, in Seitenansicht partiell geschnitten;
Fig. 3a - Fig. 3d als Kontaktspitzenvarianten in perspektivischen Darstellungen.

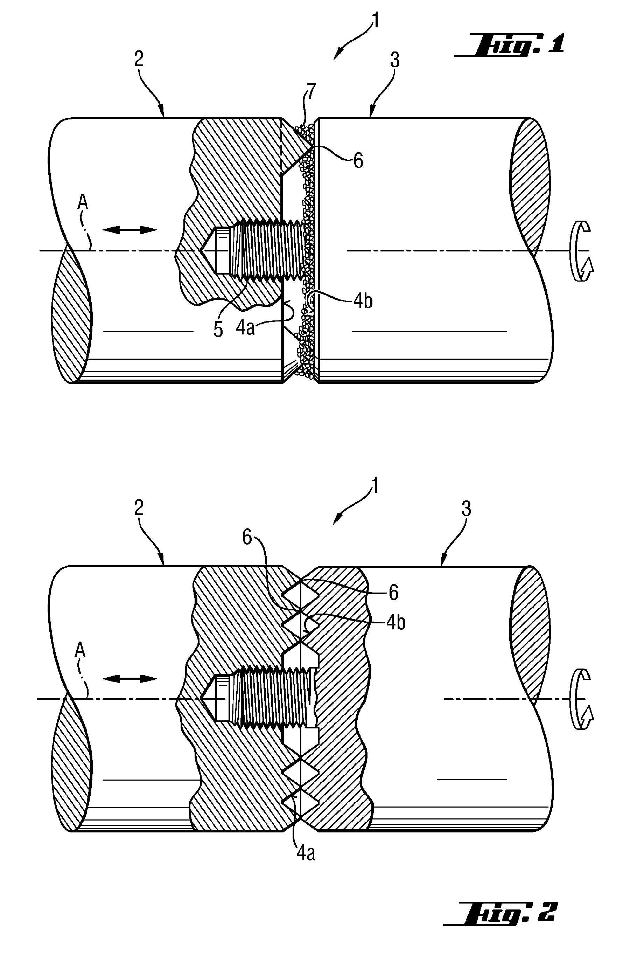

Nach Fig. 1 sind bei einer Kupplung 1 zur Übertragung von Ultraschall längs einer Schwingachse A zwischen einer Werkzeugaufnahme 2 und einem Werkzeug 3 zwei gegeneinander orientierte Kontaktmittel 4a, 4b vorhanden, die über ein, als eine axial orientierte Schraubgewindeverspannung ausgebildetes, Vorspannmittel 5 axial vorspannbar sind. Das Kontaktmittel 4a weist mehrere versetzt beabstandete, axial orientierte, punktförmige Kontaktspitzen 6 auf, welche Verunreinigungen 7 seitlich abdrängen.

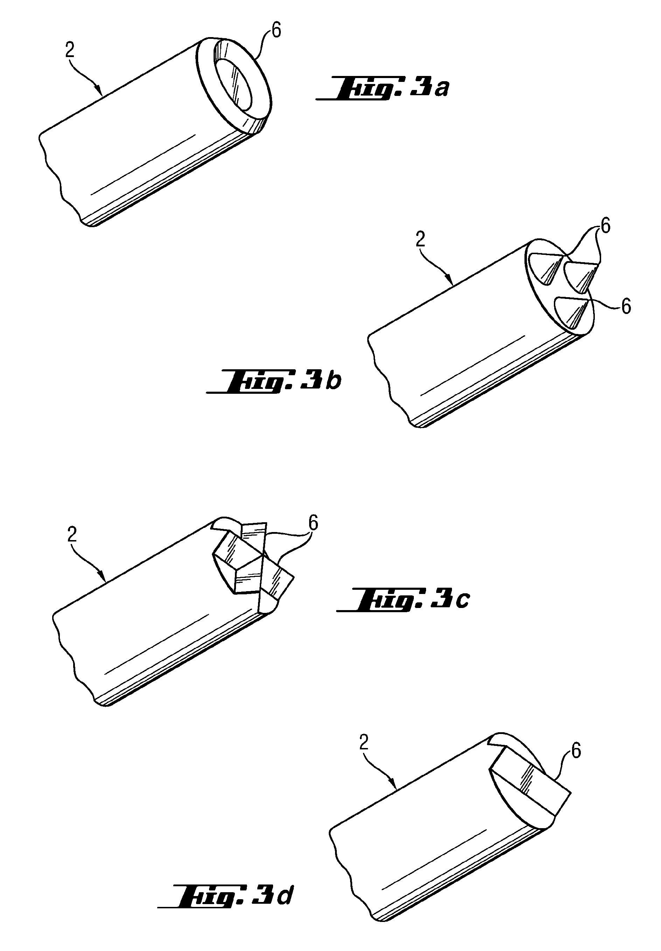

Nach Fig. 2 sind bei einer rotationssymmetrischen Kupplung 1 auf beiden Kontaktmitteln 4a, 4b einander zugeordnete Kontaktspitzen 6 ringförmig ausgebildet sowie linienförmig koaxial ineinander verschachtelt.

Nach den Fig. 3a - Fig. 3d sind viele verschiedene, ausschliesslich an der Werkzeugaufnahme 2 dargestellte, Kontaktspitzenvarianten möglich. Fig. 3a zeigt eine ringförmig linienförmige Kontaktspitze 6, Fig. 3b drei punktförmige Kontaktspitzen 6, Fig. 3c zwei gekreuzt linienförmige Kontaktspitzen 6 und Fig. 3d eine diagonal linienförmige Kontaktspitze 6.

## Patentansprüche

1. Kupplung zur Übertragung von Ultraschall längs einer Schwingachse (A) zwischen einer Werkzeugaufnahme (2) und einem Werkzeug (3) mit zwei gegeneinander orientierten Kontaktmitteln (4a, 4b), die über ein Vorspannmittel (5) axial vorspannbar sind, **dadurch gekennzeichnet, dass** zumindest ein Kontaktmittel (4a, 4b) zumindest eine axial orientierte, linienförmige oder punktförmige Kontaktspitze (6) aufweist.

2. Kupplung nach Anspruch 1, **dadurch gekennzeichnet, dass** mehrere Kontaktspitzen (6) über das Kontaktmittel (4a, 4b) versetzt beabstandet sind.

3. Kupplung nach Anspruch 1 oder 2, **dadurch gekennzeichnet, dass** beide Kontaktmittel (4a, 4b) einander zugeordnete Kontaktspitzen (6) aufweisen.

4. Kupplung nach einem der Ansprüche 1 bis 3, **dadurch gekennzeichnet, dass** die Kontaktspitze (6) linienförmig ausgebildet ist.

5. Kupplung nach Anspruch 4, **dadurch gekennzeichnet, dass** die linienförmig ausgebildete Kontaktspitze (6) ringförmig ausgebildet ist.

6. Kupplung nach einem der vorherigen Ansprüche, **dadurch gekennzeichnet, dass** das Vorspannmittel (5) als eine axial orientierte Schraubgewindeverspannung ausgebildet ist.
